# EUROPÄISCHE PATENTSCHRIFT

(11) **EP 3 212 491 B1**
(45) Veröffentlichungstag und Bekanntmachung des Hinweises auf die Patenterteilung: **24.07.2019**
(21) Anmeldenummer: 15774895.5
(22) Anmeldetag: 28.09.2015
(51) Int. Cl.: B62K 11/04, B62K 19/16, B62J 23/00

(54) **EINSPURIGES MOTORBETRIEBENES KRAFTFAHRZEUG MIT MITTRAGENDER VERKLEIDUNG**
SINGLE TRACK MOTOR DRIVEN MOTOR VEHICLE WITH JOINTLY CARRYING COWLING
VÉHICULE À MOTEUR À DEUX ROUES AVEC CARÉNAGE PORTANT

(30) Priorität: 31.10.2014 DE 102014222297
(43) Veröffentlichungstag der Anmeldung: 06.09.2017
(73) Patentinhaber: Bayerische Motoren Werke Aktiengesellschaft, 80809 München (DE)
(72) Erfinder: JÄGER, Elmar, 87439 Kempten im Allgäu (DE); SEIDL, Josef, 84130 Dingolfing (DE)
(86) Internationale Anmeldenummer: PCT/EP2015/072242
(87) Internationale Veröffentlichungsnummer: WO 2016/066348

(56) Entgegenhaltungen:
- WO-A1-01/89916
- WO-A1-2010/080291
- DE-A1- 3 019 807
- DE-A1- 3 026 970
- DE-A1- 4 224 120
- FR-A5- 2 202 489
- JP-A- H0 966 877

## Beschreibung

Die Erfindung betrifft ein einspuriges motorbetriebenes Kraftfahrzeug mit einer Rahmenträgerstruktur zur befestigenden Aufnahme zumindest eines Motors, wobei die Rahmenträgerstruktur mittragende Verkleidungsteile umfasst.

Aus dem Stand der Technik sind selbsttragende Karosserien, insbesondere bei älteren Rollern bekannt, die selbst sogar als Fahrwerk fungieren. Für aktuelle Motorräder oder Roller sind derartige Karosserieformen jedoch ungeeignet, da sie eine nicht ausreichende Steifigkeit besitzen und im Reparaturfall serviceunfreundlich in der Handhabung sind. Man ist deshalb dazu übergegangen, als tragende Struktur einen Rahmen zu verbauen, an dem unter anderem der Motor befestigt wird. Zusätzlich werden Verkleidungsteile am Rahmen als Design-und Aerodynamikbauteile angebracht. Die bekannte Verkleidung trägt jedoch nicht zur Steifigkeit der Karosserie bzw. der Rahmenkonstruktion bei. Vielmehr konkurrieren die verschiedenen Rahmen- und Verkleidungsbauteile sowie die Aggregate um den bei Motorrädern und Rollern stark eingeschränkt verfügbaren Bauraum. Der Rahmen selbst ist jedoch stets festgelegt und beschränkt die Zugänglichkeit an Aggregate wie Motor, Getriebe etc. im Servicefall. Zudem ist der Rahmen zumeist aus Stahl gefertigt und mithin gewichtsintensiv.

Weiterer Stand der Technik ist zudem aus den Offenbarungen der Druckschriften WO 01/89916 A1, DE 42 24 120 A1, FR 2 202 489 A5, JP H09 66877 A und DE 30 26 970 A1 bekannt. Die FR2202489 A5 offenbart ein einspuriges motorbetriebenes Kraftfahrzeug mit einer Rahmenträgerstruktur zur befestigenden Aufnahme zumindest eines Motors, wobei die Rahmenträgerstruktur mittragende Verkleidungsteile umfasst.

Der Erfindung liegt deshalb die Aufgabe zugrunde, ein Kraftfahrzeug mit einer Rahmenträgerstruktur bereit zu stellen, die leichter ist, mehr Bauraum für weitere Bauteile gewährleistet und im Servicefall eine verbesserte Zugänglichkeit bietet, ohne dass sich die Steifigkeit der Rahmenträgerstruktur entscheidend verschlechtert.

Diese Aufgabe wird gelöst durch eine Merkmalskombination gemäß Patentanspruch 1. Erfindungsgemäß wird dabei vorgesehen, die Rahmenträgerstruktur zur befestigenden Aufnahme zumindest eines Motors eines Kraftfahrzeugs, insbesondere Motorrads oder Rollers, aus Rahmenelementen und zumindest einem mittragenden Verkleidungsteil aus faserverstärktem Kunststoff zu bilden, wobei die Gesamtsteifigkeit der Rahmenträgerstruktur durch das zumindest eine mittragenden Verkleidungsteil mitbestimmt wird. Die Steifigkeit und mithin die Tragewirkung der mittragenden Verkleidungsteile ist durch eine mehrwandige Ausbildung weiter verbessert. Dabei wird vorgesehen, dass das mehrwandige Verkleidungsteil mindestens eine Durchströmungsöffnung aufweist, die im eingebauten Zustand während der Fahrt an- und/oder durchströmbar ist. Somit kann ein aerodynamischer Effekt durch das die Rahmenträgerstruktur mitbestimmende mittragende Verkleidungsteil Zusatzaufgaben übernehmen, durch die beispielsweise bei Fahrten mit hoher Geschwindigkeit das Fahrverhalten beeinflusst oder Aggregate gekühlt werden können.

In einer vorteilhaften Ausführungsform ist vorgesehen, dass das zumindest eine Verkleidungsteil aus CFK gebildet ist. Dabei ist insbesondere eine Sandwichbauweise günstig, bei der eine Ober- und eine Unterlage aus CFK mit einem dazwischen liegenden Abstandshalter, beispielsweise in Form einer Polyurethan-Lage verbunden sind. Als alternative Lösung ist es möglich, eine Wabenstruktur vorzusehen, die bekanntermaßen eine hohe Steifigkeit entlang der Wabenrichtung gewährleistet.

Aus Sicht einer ökonomischen und kostenoptimierten Lösung ist es günstig, dass das mindestens eine Verkleidungsteil aus CFK-Recyclingpressmasse gebildet ist. Derartige CFK-Recyclingpressmasse kann auch bei einer Sandwichbauweise als Ober- und Unterlage verwendet werden, wie oben beschrieben.

In einer ebenfalls vorteilhaften Ausführungsvariante ist vorgesehen, dass das mindestens eine mittragende Verkleidungsteil als Verkleidungssegment ausgebildet ist und flächige Abschnitte der Rahmenträgerstruktur versteift. In einer Ausführung als Verkleidungssegment kann das Verkleidungsteil bestehende Rahmenelemente ersetzen. Besonders geeignet ist beispielsweise eine Anwendung, bei der durch ein Verkleidungsteil bzw. ein Verkleidungssegment eine Rahmenversteifungsstrebe im Vorderbau der Rahmenträgerstruktur ersetzt wird.

Für Letzteres ist in einer Ausführungsvariante ferner vorgesehen, dass das mittragende Verkleidungsteil zumindest abschnittsweise Durchgangslöcher aufweist und bei einer mehrwandigen Ausbildung die Durchgangslöcher sich durch zumindest eine Wand erstrecken, so dass die hindurchströmende Luft kühlend wirkt. In einer besonderen Ausführung bilden zwei Wände des mehrwandigen Aufbaus eine Düse, innerhalb der während der Durchströmung der Druck sinkt (Bernoulli-Gleichung). Bei gleichzeitiger Anordnung der Durchgangslöcher innerhalb der Düse kann der Unterdruck zur Absaugung beispielsweise heißer Luft verwendet werden.

In einer weiteren vorteilhaften Ausführungsvariante ist an dem mindestens einen mittragenden Verkleidungsteil eine Hitzeschutzfolie angeordnet, die eine motornahe Montage ermöglicht.

Ferner ist ein Ausführungsbeispiel günstig, bei dem das mindestens eine mittragende Verkleidungsteil zweiteilig ausgebildet und zusammensetzbar ist, so dass seine Montage und Demontage von zwei Seiten zu gewährleistet ist.

Die Erfindung umfasst verschiedene Anordnungen des mittragenden Verkleidungsteils. Bei einem Motorrad ist jedoch günstig, dass die Rahmenträgerstruktur den Motor umschließend ausgebildet ist, wobei die Rahmenelemente einen oberen fahrerseitigen, einen zu einem Vorderrad und einen zu einem Hinterrad weisenden Abschnitt und das mindestens eine Verkleidungsteil einen zur Fahrbahn weisenden unteren Abschnitt bestimmen. Bei einem Motorroller, der einen Durchstieg für die Beine benötigt, ist es genau umgekehrt. Hier wird die Rahmenträgerstruktur den Motor umschließend ausgebildet ist, wobei die Rahmenelemente einen zur Fahrbahn weisenden unteren, einen zu einem Vorderrad und einen zu einem Hinterrad weisenden Abschnitt und das mindestens eine Verkleidungsteil einen fahrerseitigen Abschnitt bestimmen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen beispielhaft schematisch:
- Fig. 1: eine Seitenansicht eines Motorrades;
- Fig. 2: eine Seitenansicht eines Motorrollers;
- Fig. 3: eine Seitenansicht eines Motorrades in einer weiteren Ausführungsvariante;
- Fig. 4: eine seitliche Schnittansicht eines mehrwandigen mittragenden Verkleidungsteils.

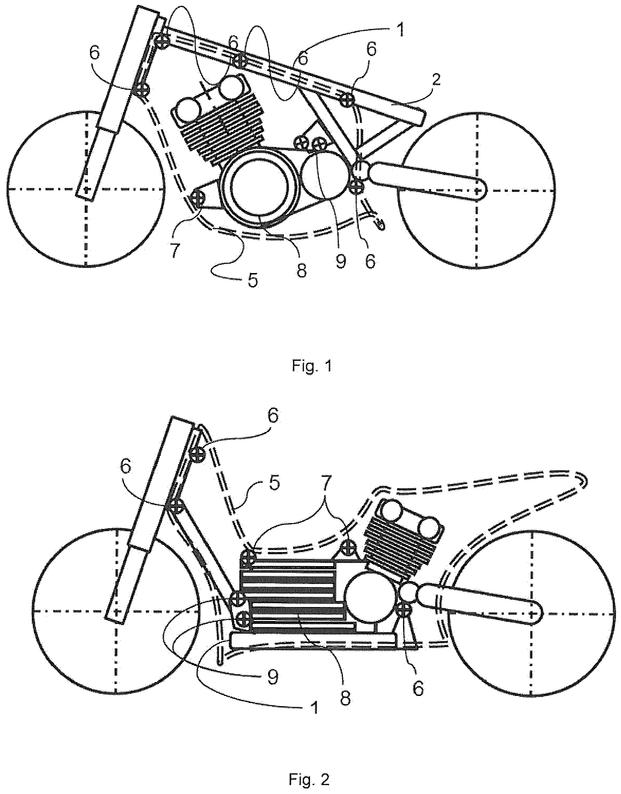

In Figur 1 ist ein Motorrad mit einer Rahmenträgerstruktur 1 zur befestigenden Aufnahme zumindest einer Antriebseinrichtung 8, 9 mit einem Motor dargestellt, wobei die Rahmenträgerstruktur 1 aus Rahmenelementen 2 und zumindest einem mittragenden Verkleidungsteil 5 aus faserverstärktem Kunststoff gebildet ist und eine Gesamtsteifigkeit der Rahmenträgerstruktur 1 durch das zumindest eine mittragenden Verkleidungsteil 5 dadurch mitbestimmt wird, dass es unmittelbar mit den Rahmenelementen 2 zusammenwirkt. In der gezeigten Ausführung ist der Motor an Befestigungspunkten 6, 7 an der Rahmenträgerstruktur 1 befestigt aufgenommen. Die mittragende Verkleidung wird durch mehrere, verbundene Verkleidungsteile 5 realisiert, die teilweise alleinstehend im Bereich unterhalb des Motors, teilweise zusätzlich im Bereich der verwendeten Rahmenelemente 2 vorgesehen sind. Figur 2 zeigt eine alternative Ausführung zu Figur 1 unter Verwendung der mittragenden Verkleidungsteile 5 an einem Motorroller mit Durchstiegsbereich, wobei die mittragenden Verkleidungsteile 5 die gesamte Antriebseinrichtung 8, 9 umgebend und insbesondere auch im oberen Fahrersitzbereich vorgesehen sind.

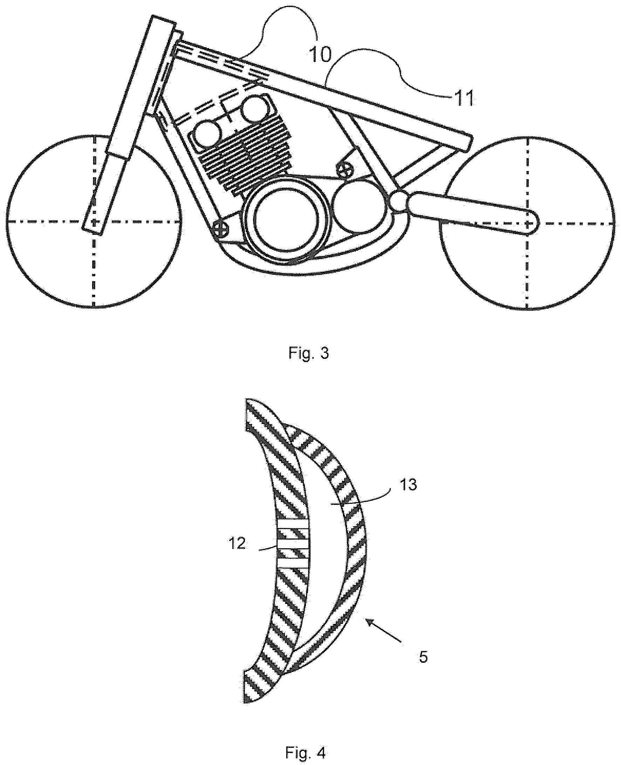

Figur 3 zeigt ein Verkleidungssegment 10 in Dreiecksform als Ersatz für herkömmliche Querstreben im Dreiecksbereich zwischen dem Oberrohr 11 der Rahmenträgerstruktur 1 und die Antriebseinrichtung 8, 9 umgebenden Rahmenelementen. Das Verkleidungssegment 10 ist lösbar befestigt und kann im Servicefall entfernt werden, so dass der Bauraum oberhalb des Motors vergrößert wird. Dadurch lässt sich beispielsweise das Ventilspiel leichter einstellen.

In Figur 4 ist in einer seitlichen Schnittansicht ein mehrwandiges Verkleidungsteil 5 mit einer Durchströmöffnung 13 zwischen zwei Wänden dargestellt. Die Durchströmöffnung 13 ist als Düse ausführbar. Eine Wand des mehrwandigen Verkleidungsteils 5 ist mit Durchtrittsöffnungen 12 versehen, um einen Lufteintritt in die Durchströmöffnung 13 zu ermöglichen und beispielsweise heiße Luft von Aggregaten wie Motor/Getriebe/Abgasanlage etc. abzuführen. Innenseitig kann zusätzlich beispielsweise eine nicht gezeigte Hitzeschutzfolie vorgesehen werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können auch weitere Faserverbundwerkstoffe verwendet werden. Als Motorroller werden erfindungsgemäß auch die Roller mit zwei Vorderrädern und einem Hinterrad verstanden.

## Patentansprüche

1. Motorbetriebenes, insbesondere einspuriges Kraftfahrzeug mit einer Rahmenträgerstruktur (1) zur befestigenden Aufnahme zumindest eines Motors, wobei die Rahmenträgerstruktur (1) aus Rahmenelementen (2) und zumindest einem mittragenden Verkleidungsteil (5) aus faserverstärktem Kunststoff mit gebildet ist, eine Gesamtsteifigkeit der Rahmenträgerstruktur (1) durch das zumindest eine mittragenden Verkleidungsteil (5) mitbestimmt wird, **dadurch gekennzeichnet, dass** das mindestens eine mittragende Verkleidungsteil (5) mehrwandig mit mindestens einer Durchströmungsöffnung (13) ausgebildet ist.

2. Kraftfahrzeug nach Anspruch 1, **dadurch gekennzeichnet, dass** das zumindest eine Verkleidungsteil (5) aus CFK, insbesondere in Sandwichbauweise gebildet ist.

3. Kraftfahrzeug nach dem vorigen Anspruch, **dadurch gekennzeichnet, dass** das mindestens eine Verkleidungsteil (5) aus CFK-Recyclingpressmasse gebildet ist.

4. Kraftfahrzeug nach einem der vorigen Ansprüche, **dadurch gekennzeichnet, dass** das mindestens eine mittragende Verkleidungsteil (5) als Verkleidungssegment ausgebildet ist und flächige Abschnitte der Rahmenträgerstruktur (1) versteift.

5. Kraftfahrzeug nach einem der vorigen Ansprüche, **dadurch gekennzeichnet, dass** das mindestens eine mittragende Verkleidungsteil (5) zumindest ein Rahmenelement (2), insbesondere eine Rahmenversteifungsstrebe im Vorderbau der Rahmenträgerstruktur (1) ersetzt.

6. Kraftfahrzeug nach einem der vorigen Ansprüche, **dadurch gekennzeichnet, dass** das mindestens eine mittragende Verkleidungsteil (5) zumindest abschnittsweise Durchgangslöcher (12) aufweist und die Durchgangslöcher sich durch zumindest eine Wand erstrecken.

7. Kraftfahrzeug nach einem der vorigen Ansprüche, **dadurch gekennzeichnet, dass** an dem mindestens einen mittragenden Verkleidungsteil (5) eine Hitzeschutzfolie angeordnet ist, die eine motornahe Montage ermöglicht.

8. Kraftfahrzeug nach einem der vorigen Ansprüche, **dadurch gekennzeichnet, dass** das mindestens eine mittragende Verkleidungsteil (5) zweiteilig ausgebildet und zusammensetzbar ist, so dass seine Montage von zwei Seiten zu gewährleistet ist.

9. Kraftfahrzeug ausgebildet als Motorrad nach einem der vorigen Ansprüche, **dadurch gekennzeichnet, dass** die Rahmenträgerstruktur (1) den Motor umschließend ausgebildet ist, wobei die Rahmenelemente (2) einen fahrerseitigen oberen, einen zu einem Vorderrad und einen zu einem Hinterrad weisenden Abschnitt und das mindestens eine Verkleidungsteil (5) einen zur Fahrbahn weisenden unteren Abschnitt bestimmen.

10. Kraftfahrzeug ausgebildet als Motorroller mit zwei oder drei Rädern nach einem der vorigen Ansprüche 1 bis 8, **dadurch gekennzeichnet, dass** die Rahmenträgerstruktur (1) den Motor umschließend ausgebildet ist, wobei die Rahmenelemente (2) einen zur Fahrbahn weisenden unteren, einen zu einem Vorderrad und einen zu einem Hinterrad weisenden Abschnitt und das mindestens eine Verkleidungsteil (5) einen fahrerseitigen Abschnitt bestimmen.

## Claims

1. A motor-driven, especially single-track, motor vehicle having a frame member structure (1) for receiving at least one engine in a fastening manner, wherein the frame member structure (1) is jointly formed from frame elements (2) and at least one jointly supporting cladding part (5) made of fibre-reinforced plastics material, an overall stiffness of the frame member structure (1) is co-determined by the at least one jointly supporting cladding part (5), **characterised in that** the at least one jointly supporting cladding part (5) is formed with multiple walls with at least one throughflow opening (13).

2. A motor vehicle according to Claim 1, **characterised in that** the at least one cladding part (5) is formed from CFRP, especially in a sandwich construction.

3. A motor vehicle according to the preceding claim, **characterised in that** the at least one cladding part (5) is formed from recycled CFRP moulding compound.

4. A motor vehicle according to one of the preceding claims, **characterised in that** the at least one jointly supporting cladding part (5) is designed as a cladding segment and reinforces two-dimensional portions of the frame member structure (1).

5. A motor vehicle according to one of the preceding claims, **characterised in that** the at least one jointly supporting cladding part (5) replaces at least one frame element (2), especially a frame reinforcement strut in the front end of the frame member structure (1).

6. A motor vehicle according to one of the preceding claims, **characterised in that** the at least one jointly supporting cladding part (5), at least in portions, has through-holes (12) and the through-holes extend through at least one wall.

7. A motor vehicle according to one of the preceding claims, **characterised in that** a heat-protection foil which permits mounting close to the engine is arranged on the at least one jointly supporting cladding part (5).

8. A motor vehicle according to one of the preceding claims, **characterised in that** the at least one jointly supporting cladding part (5) is designed and can be assembled in two parts, so that its mounting is ensured from two sides.

9. A motor vehicle designed as a motorcycle according to one of the preceding claims, **characterised in that** the frame member structure (1) is designed to enclose the engine, the frame elements (2) determining a driver-side upper portion, a portion facing towards a front wheel and a portion facing towards a rear wheel and the at least one cladding part (5) determining a lower portion facing towards the roadway.

10. A motor vehicle designed as a motor scooter with two or three wheels according to one of the preceding Claims 1 to 8, **characterised in that** the frame member structure (1) is designed to enclose the engine, the frame elements (2) determining a lower portion facing towards the roadway, a portion facing towards a front wheel and a portion facing towards a rear wheel and the at least one cladding part (5) determining a driver-side portion.

## Revendications

1. Véhicule automobile entraîné par un moteur, en particulier ayant une seule ligne de roues comprenant une structure de support de cadre (1) permettant de recevoir et de fixer au moins un moteur, la structure de support de cadre (1) étant formée par l'assemblage d'éléments de cadre (2) et d'au moins une partie d'habillage portante (5) en un matériau synthétique renforcé par des fibres, la rigidité globale de la structure de support de cadre (1) étant influencée par la pièce d'habillage portante (5), **caractérisé en ce que**
la pièce d'habillage portante (5) comporte plusieurs parois comprenant au moins une ouverture de circulation (13).

2. Véhicule conforme à la revendication 1,
**caractérisé en ce que**
la pièce d'habillage (5) est réalisée en CFK, en particulier selon une construction de type sandwich.

3. Véhicule conforme à la revendication précédente,
**caractérisé en ce que**
la pièce d'habillage (5) est réalisée en une masse à mouler de recyclage en chlorofluorocarbures (CFK).

4. Véhicule conforme à l'une des revendications précédentes,
**caractérisé en ce que**
la pièce d'habillage portante (5) est réalisée sous la forme d'un segment d'habillage et renforce des segments plats de la structure de support de cadre (1).

5. Véhicule conforme à l'une des revendications précédentes,
**caractérisé en ce que**
la pièce d'habillage portante (5) remplace au moins un élément de cadre (2) en particulier une entretoise de renfort de cadre à l'avant de la structure de support de cadre (1).

6. Véhicule conforme à l'une des revendications précédentes,
**caractérisé en ce que**
la pièce d'habillage portante (5) comporte au moins par zones des perçages traversants (12), et les perçages traversants s'étendent au travers d'au moins une paroi.

7. Véhicule conforme à l'une des revendications précédentes,
**caractérisé en ce que**
sur la pièce d'habillage portante (5) est positionné une feuille de protection ou un écran pare chaleur qui permet un montage proche du moteur.

8. Véhicule conforme à l'une des revendications précédentes,
**caractérisé en ce que**
la pièce d'habillage portante (5) est réalisée en deux parties et peut être assemblée de sorte que son montage soit possible à partir de deux côtés.

9. Véhicule réalisé sous la forme d'un motocycle conforme à l'une des revendications précédentes,
**caractérisé en ce que**
la structure de support de cadre (1) entoure le moteur et les éléments de cadre (2) comportent un segment supérieur côté conducteur, un segment tourné vers la roue avant et un segment tourné vers la roue arrière, et, la pièce d'habillage (5) comporte un segment inférieur tourné vers la chaussée.

10. Véhicule réalisé sous la forme d'un scooter ayant deux ou trois roues conforme à l'une des revendications précédentes 1 à 8,
**caractérisé en ce que**
la structure de support de cadre (1) entoure le moteur et les éléments de cadre (2) comportent un segment inférieur tourné vers la chaussée un segment tourné vers la roue avant et un segment tourné vers la roue arrière et la pièce d'habillage (5) comporte un segment situé côté conducteur.
